Europäisches Patentamt

European Patent Office

Office européen des brevets

(11) Publication number: **0 315 244**
**A2**

## (12) EUROPEAN PATENT APPLICATION

(21) Application number: 88202358.3

(22) Date of filing: 21.10.88

(51) Int. Cl.4: **C08K 7/06 , C08K 7/02 , C08J 5/24 , C08J 5/04**

(30) Priority: 23.10.87 US 112794

(43) Date of publication of application:
10.05.89 Bulletin 89/19

(84) Designated Contracting States:
AT BE CH DE ES FR GB GR IT LI LU NL SE

(71) Applicant: THE DOW CHEMICAL COMPANY
2030 Dow Center Abbott Road P.O. Box 1967
Midland Michigan 48640-1967(US)

(72) Inventor: McCullough, Francis P., Jr.
104, Fir Drive
Lake Jackson Texas 77566(US)
Inventor: Dick, Clarence R.
124 Blossom Street
Lake Jackson Texas 77566(US)
Inventor: Brewster, Steven L.
103 Pine Street
Lake Jackson Texas 77566(US)

(74) Representative: Smulders, Theodorus A.H.J.,
Ir. et al
Vereenigde Octrooibureaux Nieuwe Parklaan
107
NL-2587 BP 's-Gravenhage(NL)

(54) Carbonaceous fiber reinforced polymeric composites.

(57) The present invention is concerned with a fiber reinforced composite having excellent impact resistance and comprising a polymeric matrix containing a multiplicity of nonlinear, irreversibly heat set, resilient, shape reforming, elongatable, nonflammable carbonaceous fibers or, optionally, a blend of said carbonaceous fibers with other fibers, said carbonaceous fibers preferably have a sinusoidal or coil-like shape, a reversible deflection ratio of greater than 1.2:1 and an aspect ratio (1/d) greater than 10:1.

EP 0 315 244 A2

# CARBONACEOUS FIBER REINFORCED POLYMERIC COMPOSITES

This invention relates to composite materials of carbonaceous reinforcing fibers or blends of said carbonaceous fibers with other fibers in a matrix of a polymeric material.

Fiber reinforced composites are well-known materials and have been used in many industrial fields, such as in the aerospace and automotive industries. There has been a growing demand in these industries for the development of high performance composite materials having high strength, high rigidity and vibration and/or high impact resistance.

Various reinforcing fibers, multifilament tows or yarns and woven and knitted fabrics made from such fibers are known for reinforcing plastic materials. The reinforcing fibers include, for example, carbon and graphite fibers, glass fibers, polyaramide fibers, silicon carbide fibers and metal fibers. The materials used with such reinforcing fibers have included various polymeric materials such as, for example, unsaturated polyesters, epoxies, phenolics and polyimides.

Many of the fiber reinforced composites of the prior art, while offering high strength and rigidity, do not provide sufficient vibration and/or impact resistance to form a satisfactory material for various end uses such as for structural dampening, outer body panels of vehicles and aircraft or turbine blades. In addition, in many of the fiber reinforced composites delamination occurs between the fibers and the polymeric matrix when the composite is subjected to shear stresses, which may result in the composite failing in some uses.

It is desired to provide an improved composite material, comprising a matrix of a polymeric material reinforced with carbonaceous fibers, having improved impact resistance and adhesion to the resinous matrix, which does not delaminate or cause propagation of cracks when the composite is subjected to stresses and which has improved ability to take up the polymeric material and be more easily and readily formed over complicated structural shapes prior to the addition of the polymeric material.

More particularly, the carbonaceous fibers are nonflammable, nonlinear, substantially irreversibly heat set, lightweight, resilient, shape reforming, and elongatable, and have a reversible deflection ratio of greater than 1.2:1 and an aspect ratio (1/d) of greater than 10:1.

Generally, the carbonaceous fibers are impregnated with the polymeric material in liquid form and solidified or cured by heat and pressure. The reinforcing fibers in the composite material are present in an amount of from 5 to 95 percent, and more preferably from 20 to 50 percent, although it can be varied appropriately depending on the particular purpose for which the composite is to be used. All percentages herein are given in percent by weight, unless otherwise specified.

The term "Polymer" or "Polymeric Material" used herein applies to organic polymers as defined in Hawley's Condensed Chemical Dictionary, Eleventh Edition, published by Van Nostrand Rheinhold Company. The organic polymers generally include: 1) natural polymers, such as cellulose, and the like; 2) synthetic polymers such as thermoplastic or thermosetting elastomers; and 3) semythynthetic cellulosics.

Thermoplastic resins may include one or more of the following: polyethylene, ethylenevinyl acetate copolymers, polypropylene, polystyrene, polyvinyl chloride, polyvinyl acetate, polymethacrylate, acrylonitrile-butadiene-styrene copolymers (ABS), polyphenylene oxide (PPO), modified PPO, polycarbonate, polyacetal, polyamide, polysulfone, polyether sulfone, polyolefins, polyacrylonitrile, polyvinylidene chloride, polyvinyl acetate, polyvinyl alcohol, polyvinyl pyrrolidone, ethyl cellulose, polyvinyl chloride vinyl acetate copolymer, polyacrylonitrile-styrene copolymer, polyacrylonitrile-vinyl chloride copolymer, carboxymethylcellulose, polyparaxylene, polyimide, polyamide-imide, polyester imide, polybenzimidazole, polyoxadiazole and the like.

Thermosetting resins may include one or more of the following resins: phenol, urea, melamine, epoxy, alkyd, vinyl ester, polyester, xylene, furanic and the like.

Rubbers may include one or more of the following: natural rubber, silcone rubber, polychloroprene rubber, polyisoprene-isobutylene copolymers, styrene-butadiene copolymers, ethylene-propylene base copolymers, ethylene-butadiene block copolymers, butadiene-acrylonitrile copolymers, polyurethane and the like.

The carbonaceous fibers employed in the present invention possess a sinusoidal or coil-like configuration or a more complicated structural combination of the two. Suitable carbonaceous fibers that can be employed are those that are described in European Patent Application Serial No. 0199567, published October 29, 1986, to F. P. McCullough, et al entitled, "Carbonaceous Fibers with Spring-Like Reversible Deflection and Method of Manufacture."

The carbonaceous fibers of this invention have a LOI value greater than 40 when the fibers are tested according to the test method of ASTM D 2863-77. The test method is also known as "oxygen index" or "limited oxygen index" (LOI) . With this procedure the concentration of oxygen in $O_2/N_2$ mixtures is determined at which a vertically mounted specimen is ignited at its upper end and just (barely) continues to burn. The width of the specimen is 0.65 to 0.3 cm with a length of from 7 to 15 cm. The LOI value is calculated according to the equation:

$$LOI = \frac{[O_2]}{[O_2] + [N_2]} \times 100$$

The LOI value of a number of fibers is as follows:

| | |
|---|---|
| polypropylene | 17.4 |
| polyethylene | 17.4 |
| polystyrene | 18.1 |
| rayon | 18.6 |
| cotton | 20.1 |
| nylon | 20.1 |
| polycarbonate | 22 |
| rigid polyvinyl chloride | 40 |
| oxidized polyacrylonitrile | >40 |
| graphite | 55 |

The carbonaceous fibers of this invention are prepared by heat treating a suitable stabilized precursor material such as that derived from a fiber assembly of polymeric materials which can be made into an irreversibly heat set, nonlinear fiber or filament structures or configurations. A suitable stabilized precursor material may be, for example, a material derived from a fiber assembly of stabilized acrylic based materials or stabilized pitch (petroleum or coal tar) based materials. Preferably, the pretreated stabilized precursor material used in the present invention is derived from stabilized polyacrylonitrile (PAN) filaments.

Polymeric precursor materials such as stabilized acrylic filaments which are advantageously utilized in preparing the carbonaceous fibers for use in the composites of the invention are selected from one or more of the following: acrylonitrile homopolymers, acrylonitrile copolymers and acrylonitrile terpolymers. The copolymers preferably contain at least about 85 mole percent of acrylonitrile units and up to 15 mole percent of one or more monovinyl units copolymerized with styrene, methylacrylate, methyl methacrylate, vinyl chloride, vinylidene chloride, vinyl pyridine and the like. The acrylic filaments may also comprise terpolymers wherein the acrylonitrile units are at least about 85 mole percent.

The preferred precursor materials are prepared by melt spinning or wet spinning the precursor materials in a known manner to yield a monofilament or multifiber tow. The fibers, yarn or tow are woven or knitted into a cloth or fabric by any of a number of commercially available techniques. The fibers or cloth are then heated to a temperature above 525°C, preferably above 550°C, and thereafter deknitted and carded to produce a wool-like fluff which can be laid up in a batting or web-like form.

In the case of polyacrylonitrile based fibers, the fibers are formed by conventional methods such as by melt or wet spinning a suitable liquid of the precursor material. The PAN based fibers which have a normal nominal diameter of from 4 to 25 micrometers are collected as an assembly of a multiplicity of continuous filaments in tows. The fibers are then stabilized, for example by oxidation or any other conventional method of stabilization, and the stabilized fibers, tows or staple yarn made from chopped or stretch broken fiber staple are thereafter formed into a nonlinear form by knitting the tow or yarn into a fabric or cloth, recognizing that other shape forming methods, such as crimping and coil forming, combined with thermosetting, can be employed to produce the nonlinear shape.

The so-formed knitted fabric or cloth is thereafter heat treated, in a relaxed and unstressed condition, at a temperature of from 525° to 750°C, in an inert atmosphere for a period of time to produce a heat induced thermoset reaction wherein additional cross-linking and/or a cross-chain cyclization reaction occurs between the original polymer chain. At a lower temperature range of from 150°C to 525°C, the fibers are provided with a varying proportion of temporary to permanent set while in an upper range of temperatures of from 525°C and above, the fibers are provided with a substantially permanent or irreversible heat set. The heat treated fabric or cloth may be deknitted, if desired, to produce a tow or yarn containing the nonlinear fibers

3

which have a nominal diameter of from 7 to 20 micrometers.

The term "permanent" or "irreversible heat set" used herein applies to nonlinear carbonaceous fibers which have been heat treated until they possess a degree of irreversibility where the nonlinear fibers, when stretched to a substantially linear shape, without exceeding their internal tensile strength, will revert to their original nonlinear configuration once the stress on the fiber is released.

It is to be understood that the fiber or fiber assembly may be initially heat treated at the higher range of temperatures so long as the heat treatment is conducted while the nonlinear configuration, such as a coil-like and/or sinusoidal configuration, is in a relaxed or unstressed state and under an inert, nonoxidizing atmosphere.

As a result of the higher temperature treatment of 525°C and above, a substantially permanently or irreversible heat set sinusoidal or coil-like configuration or structure is imparted to the fibers, yarns, tows or threads. The resulting yarns, tows or threads having the nonlinear structural configuration may be used per se or opened to form a wool-like fluff. Such wool-like fluff has a bulk density of from 2.4 to 32 kg/m$^3$. A number of methods known in the art can be used to create an opening, a procedure in which the yarn, tow or the fibers of the cloth are separated into an entangled, wool-like fluffy material in which the individual fibers retain their coil-like or sinusoidal configuration yielding a fluff or batting-like body of considerable loft.

The stabilized fibers when converted to their desired structural configuration, e.g., by knitting, and thereafter heating to a temperature greater than 550°C, retain their resilient and reversible deflection characteristics. It is to be understood that higher temperatures may be employed of up to about 1500°C, but the most flexible and smallest loss of fiber breakage, when the tow or cloth is carded to produce the fluff, is found in those fibers and/or filaments which have been heat treated to a temperature of from 525°C to 750°C.

It is to be further understood that carbonaceous precursor starting materials may have imparted to them an electrically conductive property on the order of that of metallic conductors by heating the fiber fluff, batting, or web shaped material to a temperature above 1000°C in a nonoxidizing atmosphere. The electroconductive property may be obtained from selected starting materials such as pitch (petroleum or coal tar), polyacetylene, acrylonitrile based materials, e.g., a polyacrylonitrile copolymer such as PANOX™ or GRAFIL-01™ (trademarks of E. I. du Pont de Nemours & Co.), polyphenylene, polyvinylidene chloride resin, SARAN™ (trademark of The Dow Chemical Company), and the like.

Carbonaceous fibers that are derived from nitrogen containing polymeric materials, such as an acrylic based polymer, generally have a nitrogen content of from 5 to 35 percent, preferably from 16 to 25 percent, more preferably from 18 to 20 percent.

The "electrical resistance" of a carbonaceous fiber is determined by measurement on a 6K tow of fibers with the individual fibers having a nominal diameter of from 7 to 20 microns. The "specific resistivity is calculated by measurements as described in European Patent Application Serial No. 0199567.

The carbonaceous fibrous material which is utilized in the composite structures of this invention may be classified into three groups depending upon the particular use and the environment that the structures in which they are incorporated are placed.

In a first group, the carbonaceous fibers are electrically nonconductive and possess no antistatic characteristics, i.e., they are not able to dissipate an electrostatic charge. The nonconductive fibers have an electrical resistance of greater than $4 \times 10^6$ ohms/cm and, correspondingly, a specific resistivity of greater than $10^{-1}$ ohm-cm. When the nonconductive fibers are selected from an acrylic polymer, it was determined that the nitrogen content of such fibers was greater than about 18 percent.

In a second group, the carbonaceous fibers are classified as being partially electrically conductive (having low conductivity) and having an electrostatic dissipating capability. The carbon content of the fibers is less than 85 percent and the electrical resistance is generally from $4 \times 10^6$ to $4 \times 10^3$ ohms/cm. Preferably, when the carbonaceous fibers are derived from stabilized acrylic fibers, they possesses a percentage nitrogen content of from 16 to 20 percent, more preferably from 18 to 20 percent.

In a third group are the fibers having a carbon content of at least 85 percent. These fibers are characterized as being highly electrically conductive. That is, the resistance is less than $4 \times 10^3$ ohms/cm. Correspondingly, the specific resistivity is less than about $10^{-1}$ ohms/cm. Fibers having a low electrical resistance are particularly useful in applications where electrical grounding or shielding are also desired.

The carbonaceous fibers of this invention may be used in substantially any desired fabricated form which will depend on the purpose for which the composite is to be used. The structures formed from the carbonaceous fibers are lightweight, have low moisture absorbency, good abrasive strength together with good appearance and handle.

In one embodiment, the composite material may include the original thermally set knitted fabric containing the nonlinear carbonaceous fibers. In another embodiment of this invention, the composite material may include the individual nonlinear carbonaceous fibers in the form of long or short fibers. The fibers generally can be from 3 mm to 5 cm in length. In still another embodiment, the nonlinear fibers may be used in the form of a fiber assembly such as a yarn or tow composed of many filaments. In still another embodiment, the fibers can be formed into a knitted cloth, for example, plain jersey knit, interlock, ribbed, cross float jersey knit or weft knit and the like, or woven into a fabric, for example of plain weave, satin weave, twill weave, basket weave and the like. The woven fabric may combine the nonlinear carbonaceous fibers of the present invention, for example as warp, and other synthetic or natural fibers discussed below as the fill, or vice versa. The fiber assembly may also be in the form of a nonwoven material or fabric such as a mat, fluff or batting of fibers such as described above. In another embodiment the composite may include the wool-like fluffy material produced from the thermally set knitted fabric which contains the nonlinear fiber. This fluffy material or batting-like structure can also be a blend of the nonlinear carbonaceous fibers and other fibers as described below or various conventional binders to add, for example, stiffness and integrity to the batting structure.

Other fabricated items containing the nonlinear carbonaceous fibers which can be readily formed by conventional equipment may include, for example, cloth such as herringbone weave cloth, twill weave tape, tubular woven fabric, paper, batts, blankets, roving, yarn, cord, rope and nonwoven structures.

The carbonaceous fibers may be blended with other fibers. Examples of other reinforcing fibers that may be used include linear or nonlinear fibers that may be selected from natural or polymeric fibers, other carbon fibers, ceramic fibers, glass fibers, or metal or metal coated fibers. Particular natural or polymeric fibers that may be included into a blend with carbonaceous fibers are cotton, wool, polyester, polyolefin, nylon, rayon, asbestos, fibers of silica, silica alumina, potassium titantate, silicon carbide, silicon nitride, boron nitride, boron, acrylic fibers, tetrafluoroethylene fibers, polyamide fibers, vinyl fibers, protein fibers, and oxide fibers derived from boron, thoria or zirconia.

It will be understood that the carbonaceous fibers and fiber blends of the invention may be utilized with other reinforcing fibers in various fibrous structures provided that the carbonaceous fibers and fiber blends are present to impart their desirable characteristics to the fibrous structure. In this respect, a plurality of laminates of different fiber structures are contemplated in which the carbonaceous fibers form the surface, facing the environment against which protection is sought. However, when the carbonaceous fibers are in admixture with noncarbonaceous fibers, up to about 50 percent, preferably from 20 to 30 percent of noncarbonaceous fibers may be utilized. The blends are prepared and processed on conventional machinery.

Once the carbonaceous fibers or carbonaceous fiber assemblies of the present invention are produced, the fibers are incorporated into a polymeric matrix to produce various composite structures. The composite structures can be formed into substantially any fabricated form desired depending on its intended end use. For example, the fiber reinforced composite of the present invention may be in the form of a sheet, a multilayered assembly, or a three-dimensional shaped article suitable for any desired use. The fiber reinforced composite can be advantageously produced by impregnating or coating a base material composed of the reinforcing fibers with the polymeric material, by mixing and kneading the reinforcing fibers with the resinous material, or by laminating the fibers and resinous material. A fiber/resin matrix prepreg may also be formed. The operation of impregnation, coating, mixing and lamination can be carried out by conventional methods.

For example, in one embodiment of the present invention, an article that is under tension can be prepared by using a reinforcing carbonaceous fiber tow or staple yarn which is stretched until taut, i.e. the tension on the fiber tow or yarn does not exceed the internal tensile strength of the tow or yarn, and held in place by a conventional frame or jig. The stressed reinforcing tow or yarn is then impregnated with a thermoset resin such as an epoxy or DERAKANE™ (a trademark of The Dow Chemical Company) and subsequently heat treated in order to polymerize or cure the resin system to form the polymer/fiber composite.

The above composites are particularly useful for sports and recreation equipment. Examples of items that can be manufactured from the composite materials of the present invention include fishing poles, sail boat masts, tennis rackets, golf club shafts, baseball bats and the like. Various other composite articles where strength, flexibility and corrosion resistance are desirable can be made utilizing the carbonaceous fibers of this invention.

In another embodiment of the present invention, a three-dimensionally shaped structure comprising a thermosetting or thermoplastic polymeric resin and the carbonaceous fibers of this invention can be made substantially more readily than heretofore using standard techniques known in the art. When the longer, more flexible carbonaceous fibers of the present invention are incorporated into thermoplastic and thermosetting polymeric resin systems, the flexible fibers will process at much greater lengths than traditional carbon fibers and consequently, the composite material will have higher strength at equivalent fiber loadings, as well as a greater ability to bend in a tighter arc (sharper angle) as compared to other reinforced carbon composite systems. It is believed that the coil-like or sinusoidal shaped carbonaceous fibers allow for an increase in processability as compared to other straight or linear fibers.

Depending on the particular purpose for which the composite of this invention is to be used, if desired the composite may include one or more additives such as fillers, pigments, fire retardants, light stabilizers and antioxidants. Specific examples of the above additives are calcium carbonate, calcium silicate, silica, alumina, carbon black and titanium oxide.

As will be apparent to those skilled in the art, the carbonaceous reinforcing fibers used in this invention may be subjected to a process to convert them into a usually available form such as by a yarn making process prior to combining with the resin. Before combining the carbonaceous fibers with the polymeric resin matrix, the fiber may be treated with various treating agents, such as for reducing or improving bonding between the fibers and the polymeric resin. In addition, the fibers may be coated with a coupling agent, a surface modifying agent or a resin such as an epoxy resin, before they are used to produce the composite material of the invention.

The composite of this invention is particularly useful in the aerospace and automotive industries. In addition, in sheet-like form the composite can be useful as various types of hoods, tents or belt materials. Furthermore, by using suitable polymeric resins, the composite of this invention may also be used as a shielding material for motors or power generators or as electrical insulating materials as in printed boards.

The present invention is further illustrated by the following examples.

Example 1

The fibers of this example were prepared following the general procedure disclosed in European Patent Application Serial No. 0199567. In this instance, a 6K (6000 filaments) oxidized polyacrylonitrile fiber (OPF), GRAFIL-01™ stabilized tow was knitted on a flat bed knitting machine at a rate of 4 stitches/cm. The resulting fabric was then treated at a temperature of 573°C in an inert (nitrogen) atmosphere for about 15 minutes.

A mixture consisting of 400 g of a first epoxy resin, D.E.R.™ 383 (a trademark of The Dow Chemical Company), 100 g of a second epoxy resin, D.E.R.™ 732 and 68 g of an epoxy hardener, diamino cyclohexane TACTIX™ H32 (a trademark of The Dow Chemical Company) was prepared and stirred well. The mixture was then placed in an empty vacuum desiccator. The desiccator was evacuated for 15 minutes and then restored to atmospheric pressure. Evacuation and re-equalibration with atmospheric pressure was carried out 3 times.

A small amount of the above resin mixture was poured onto a MYLAR™ (a trademark of E. I. du Pont de Nemours and Co., Inc.) sheet and formed into a 25 cm x 25 cm square. A single ply of a knitted fabric made from nonlinear carbonaceous fibers, measuring 25 cm x 25 cm and weighing approximately 100 g, was thermally set at 573°C and was then placed on the resin coated sheet and the resin worked into the knitted material with a steel roller until all the fibers were thoroughly wetted. Because of the unexpected affinity of the carbonaceous fiber for the resin mixture, and the immediate and surprising absorption of the resin into the carbonaceous fiber, it was necessary to continuously add small amounts of resin to various parts of the fabric surface in order to uniformly wet the surface with the epoxy formulation. When the fabric surface was considered to be thoroughly and uniformly wetted, a small amount of the resin formulation was poured onto the surface of the fabric and, with the steel roller, evenly distributed over the surface of the fabric. A second 25 cm x 25 cm ply of the fabric was placed on top of the first ply and the above process of working resin uniformly into the fabric was repeated.

After 3 plies of the carbonaceous fiber fabric had been so treated, a second sheet of MYLAR™ was placed on top of the epoxy resin/carbonaceous fiber composite. Excess resin was then removed from the composite by applying pressure while rolling a rigid plastic pipe (5 cm I.D.) over the top of the composite. Any air bubbles appearing on the surface were removed by running a straight-edge across the surface to push out bubbles. The upper MYLAR™ sheet was fixed to a preparation bench with masking tape in such a manner so as to place downward pressure on the composite structure. After curing for 8 hours at room temperature, the composite was further cured for 15 hours at 110°C to 120°C.

Comparative Example A

A fiber/resin composite was made following the same procedure of Example 1, except that seven 25 cm x 25 cm plies of KEVLAR™ 49 (a trademark of E. I. du Pont de Nemours and Co., Inc.) fiber were used. It was noted that the KEVLAR™ exhibited little affinity for the resin formulation.

Comparative Example B

A fiber/resin composite was made following the same procedure of Example 1, except that eight 25 cm x 25 cm plies of woven graphite (Hysol Grafil/Textile Products, Fabric 4598) were used. It was observed that the graphite exhibited little affinity for the epoxy resin.

Example 2

A fiber-resin composite was made following the procedure of Example 1, except that three 25 cm x 15 cm plies of needle punched carbonaceous fibers of the present invention in nonwoven mat form (heat set at 550°C) were used. As observed with the knit fabric in Example 1, the nonwoven mat demonstrated an unexpected capacity, or affinity, for the epoxy resin formulation. An example of structures which proved to be effective where great resistance to delamination is required such as for structural dampening applications or applications in high vibration environments was produced as follows: As in Example 1, a 6K OPF tow was knit into a plain jersey fabric, the fabric treated at a temperature of about 573°C in a nonoxidizing atmosphere until it was thermally set. The fabric was deknitted and a portion of the deknit tow was cut into staple of from 14 to 17 cm nominal lengths. This so-cut staple was opened on a Shirley opener and then further processed on a Rando Webber machine, an air laying system for producing nonwoven batting. The feed plate-combing rolls were spaced at 0.3 mm and dispersed into the chamber using a 1200 rpm setting on the fan. Approximately 15 percent of polyester binder fibers were blended with the opened, nonlinear carbonaceous fibers in the preblending section of the Rando Webber. The resulting batting was passed through a Benz hot air oven (maintained at a temperature of 150°C) at a rate of 2 m/minute resulting in an oven residence time of about 1 minute. This was sufficient to achieve a light bonding of the carbonaceous fibers in the web. This structure was processed on a Hunter Fiber Locker to obtain a mechanical bonding by the needle punching process. The resulting structure was suitable as a reinforcement material.

Example 3

In a similar manner to Example 1, a portion from the same knit fabric was heat treated at a temperature of 1550°C. The cloth itself and the deknitted tow had a very high electrical conductivity. On carding 15 cm lengths of cut tow, a wool-like fluff was obtained which had fiber lengths of from 2.5 to 9.5 cm, with average lengths of 5 cm. Thus, carding of a deknitted continuous filament tow which had been subjected to a temperature of above 1000°C was still capable of producing a wool-like fluff product. The wool-like fluff of this example and Example 1 are particularly useful in applications where electrical grounding and/or shielding together with high strength and modulus are required.

Example 4

This example was carried out to visually determine the degree of bonding between fibers and the epoxy resin matrix of the composites prepared in Example 1 and Comparative Examples A and B.

A 25 cm x 25 cm x 0.6 cm fiber-epoxy composite structure, prepared in Example 1 and Comparative Examples A and B, were subjected to the impact of various caliber hand gun projectiles of different muzzle velocity from a distance of 7.5 m as described in Table I following. When the side of the composite of the present invention from which the bullets exited was examined, it was observed that no fibers protruded from the structure. Nowhere could individual fibers be distinguished from the matrix, both components appearing to have formed a completely homogeneous substance. The exit damage was limited to a circumference of about 2.5 cm and no deformation or cracking of the composite was observed outside this area. The impact of the bullet, although rupturing the composite, did not separate the fibers from the epoxy resin matrix. This observation indicates a high degree of bonding between the resin matrix and the fibers.

A 25 cm x 25 cm x 0.6 cm KEVLAR™-epoxy composite was tested as described above. When the

EP 0 315 244 A2

exitpoints of the projectiles were visually inspected, a large amount of ruptured fiber bundles clearly separated from the resin matrix were observed. The KEVLARTM composite appeared to have "splintered" with a large deformation of the surface at the exit point, i.e., the bullet impact produced a blister-like formation at the exit point. In some cases, the upper rovings of the KEVLARTM at the exit side were separated from the matrix 1.25 cm to 2.5 cm from the exit point, resulting in the appearance of cracking or delamination. The results allowed above are believed to be due to the poor adhesion between KEVLARTM and the epoxy resin.

A 25 cm x 25 cm x 0.6 cm graphite-epoxy composite was tested following the procedure above. The results were very similar to those obtained when the KEVLARTM-epoxy composites were tested. That is, much splintering and blister-like formation occurred at the projectile exit point. Again, the results obtained are believed to be due to the poor bonding between graphite fibers and polymer matrixes.

TABLE I

| Effect of Handgun Projectiles on Various Fiber-Epoxy Composites | | | |
|---|---|---|---|
| Composite Material | Projectile Calibre | Muzzle Velocity ft/sec (m/sec) | Results |
| Present Invention Composite | .22 (LR) | 1145 (343.5) | No individual fiber visible, no deformation |
| Present Invention Composite | .357 Magnum | 1450 (435.4) | No individual fiber visible, no deformation |
| KEVLARTM/Epoxy | .22 (LR) | 1145 (343.5) | Rovings separate from matrix, severe deformation |
| KEVLARTM/Epoxy | .357 Magnum | 1450 (435.4) | Rovings separate from matrix, severe deformation |
| Graphite/Epoxy | .22 (LR) | 1145 (343.5) | Did not pass through |
| Graphite/Epoxy | .357 Magnum | 1450 (435.4) | Rovings separate from matrix, severe deformation |

Example 5

A carbonaceous fiber of the present invention in knit fabric form was prepared following the same procedure as in Example 1 except that the heat treatment temperature was 650° C. The fabric was deknitted and the individual tows dipped into a 5 to 10 percent solution of polycarbonate in methylene chloride. The wet tows were dried to leave the tows impregnated with polycarbonate. Each tow was then chopped into lengths of from 2.5 to 5 cm. The lengths of polycarbonate-impregnated fibers were mixed with polycarbonate pellets in a hopper attached to an extruder such that the fiber comprised from 1 to 2 percent of the hopper mixture. Subsequently, the mixture was extruded to produce long strands of fiber-filled polycarbonate which were black in color. The strands were then fed into a pelletizer to obtain the composite in pellet form.

Example 6

Fiber-polycarbonate composites were prepared following the same procedure of Example 5 except that the fiber-polycarbonate strands were sampled prior to pelletization and subjected to a nonflammability test. The nonflammability of the material of this invention has been determined following the test procedure set forth in 14 CFR 25.853(b). The test was performed as follows:

A minimum of three 15 cm x 0.5 cm diameter strands comprised of from 1 to 2 percent carbonaceous fibers and 98 to 99 percent polycarbonate were conditioned by maintaining the specimens in a conditioning room maintained at 21° ± 2.8° C temperature and 50 percent ± 5 percent relative humidity for 24 hours preceding the test.

Each specimen was supported vertically and exposed to a Bunsen or Turill burner with a nominal I.D. tube adjusted to give a flame of 3.8 cm in height. A calibrated thermocouple pyrometer positioned in the center of the flame measured the temperature of the flame which was at about 843°C. The lower tip of the specimen was 1.9 cm above the top edge of the burner. The flame was applied to the tip of the specimens for 12 seconds and then removed.

Pursuant to the test, the material was self-extinguishing. The average burn length did not exceed 20 cm. The average after flame did not exceed 15 seconds and no flame drippings were observed.

Similar results may be achieved if the carbonaceous fiber is either derived from an acrylic precursor or a pitch based fiber.

Example 7

A carbonaceous fiber in knit fabric form (heat set in a nonoxidizing atmosphere at a temperature of from 500°C to 600°C) was deknitted into individual tows possessing a sinusoidal or coil-like shape and a reversible deflection ratio of greater than 1.2:1. The tows were stretched to their maximum extension and fixed to the interior edges of a 10 cm x 10 cm x 0.3 cm stainless steel mold such that the tows are approximately 0.3 cm apart and such that the tows form two planes, a lower and an upper plane, at 90° to one another. The mold is filled with polyethylene powder or pellets such as high density polyethylene (HDPE), linear low density polyethylene (LLDPE) or low density polyethylene (LDPE), and then compressed in a hot press of the type normally used for preparing thermoplastic placks or films, and at conditions normally used in such a process, for example, at a temperature of from 90°C to 110°C and at a pressure of from 103,000 to 276,000 kPa. After removal and cooling, the result is a prestressed polyethylene composite in which the fiber component possesses "stored" or potential energy.

Example 8

A nonlinear carbonaceous fiber-polyethylene composite, prepared following the procedure of Example 7, is placed near a flame of 843°C. As the polyethylene approaches its glass transition point temperature (Tg), the fiber contained in the composite reverts to its original sinusoidal configuration and pulls the polymer matrix away from the high temperature area thus reducing the likelihood of combustion.

Example 9

An epoxy-fiber composite is prepared following the procedure of Example 2, except that the carbonaceous fiber is prepared at 750°C, thus possessing a sufficiently low surface conductivity for static charge dissipation. After preparation, the composite structure is lightly sanded on its surfaces to ensure exposure of the conductive fibers. The resulting composite will readily dissipate a static charge. Moreover, because of the extensive entanglement of the nonwoven conductive batting, there is always intimate contact between all conductive fibers and thus an electrical current can be passed through the composite. The low bulk density of the nonwoven material which is at about less than or equal to 4 kg/m3 will provide for antistatic properties with little or no significant weight gain. Moreover, rather than using 3 plies of the nonwoven conductive mat, one ply could be used or plies of different thicknesses could be used to provide a conductive composite of the desired thickness and weight.

Example 10

An antistatic composite is prepared following the procedure of Example 9, except that the carbonaceous fiber is in a knit fabric form and prepared at 750°C to render the fabric surface conductive or antistatic.

Example 11

An epoxy-fiber composite is prepared following the procedure of Example 1, except that the fiber is prepared at a temperature of from 1000°C to 1500°C thus providing the fibers with a modulus of the order of 6.89 x 106 to 68.9 x $10^6$ kPa and a tensile strength of the order of 0.69 x $10^6$ to 2.76 x $10^6$ kPa. The composite resulting from such preparation possesses the stiffness and toughness necessary to survive low velocity impacts. In addition, the sinusoidal fiber in the composite absorbs energy from the impactor and limits the destruction produced by high velocity impacts. Thus, it is believed that the composite, when struck by a .357 Magnum bullet, fired from a distance of 7.5 m, will tend to stop or deflect the bullet and will not crack or break as compared to prior art epoxy composites which splinter and deform badly upon experiencing such an impact.

Example 12

The high modulus fibers are prepared as in Example 11. Before inclusion in the epoxy matrix, the fibers are treated with an agent such as silicone fluids to decrease the strength of the bond between the fiber and the matrix. The reduced bonding of the fibers to the resin matrix allows the fibers to dissipate the energy of the impactor more freely.

Having described the invention in detail and by reference to the preferred embodiments thereof, it will be apparent that modifications and variations, such as may be readily apparent to persons skilled in the art, are intended to be included within the scope of the invention as herein defined in the appended claims.

**Claims**

1. A fiber reinforced composite comprising a polymeric matrix containing from 5 to 95 percent of a multiplicity of nonflammable, carbonaceous reinforcing fibers, wherein said carbonaceous fibers are nonlinear, substantially irreversibly heat set, resilient, shape reforming, and elongatable, and have a reversible deflection ratio of greater than 1.2:1 and an aspect ratio (1/d) of greater than 10:1 and, optionally, blends of said nonlinear carbonaceous fibers with linear carbonaceous fibers or other fibers.

2. The structure of Claim 1, wherein the carbonaceous fibers have a carbon content of greater than 65 percent and an LOI value of greater than 40.

3. The composite of Claim 2, wherein said carbonaceous fibers are derived from stabilized polymeric precursor fibers or pitch based precursor fibers having a diameter of from 4 to 25 microns.

4. The composite of Claim 3, wherein said polymeric precursor fibers are acrylic fibers selected from acrylonitrile homopolymers, acrylonitrile copolymers and acrylonitrile terpolymers, wherein said copolymers and terpolymers contain at least 85 mole percent acrylic units and up to 15 mole percent of one or more monovinyl units copolymerized with another polymer.

5. The composite of any one of the preceding claims, wherein said carbonaceous fibers are electrically conductive and have a carbon content of at least 85 percent, an electrical resistance of less than 4 x $10^3$ ohms/cm, and a specific resistivity of less than $10^{-1}$ ohms/cm.

6. The composite of any one of Claims 1 to 4, wherein said carbonaceous fibers are electrically nonconductive or do not possess any electrostatic dissipating characteristics, have a carbon content of greater than 65 but less than 85 percent, an electrical resistance of greater than 4 x $10^3$ ohms/cm, and a specific resistivity of less than $10^{-1}$ ohms/cm.

7. The composite of any one of Claims 1 to 4, wherein said carbonaceous fibers have a low electrical conductivity and electrostatic dissipating characteristics, a carbon content of greater than 65 but less than 85 percent, have a low electrical conductivity and electrostatic dissipating characteristics, and an electrical resistance of from 4 x $10^6$ to 4 x $10^3$ ohms/cm.

8. The composite of any one of the preceding claims, wherein the reinforcing fibers are present in the polymeric matrix in an amount of from 20 to 50 percent.

9. The composite of any one of the preceding claims, wherein said carbonaceous fibers have a sinusoidal and/or coil-like configuration, and wherein said reversible deflection ratio is greater than 2:1.

10. The composite of any one of the preceding claims, wherein said carbonaceous fibers are in the form of a continuous filament, yarn or tow.

11. The composite of any one of the preceding claims, wherein said carbonaceous fibers are in the form of a nonwoven, wool-like fluff, batting or web, or in the form of a woven or knitted cloth or fabric.

12. The composite material of Claim 11, wherein the wool-like fluff or batting has a bulk density of from 2.4 to 32 kg/m³.

13. The composite of any one of the preceding claims, wherein the polymeric matrix is selected from a thermosetting resin, a thermoplastic resin, or a rubber.

14. The composite of Claim 13, wherein the thermoplastic resin is selected from polyethylene, a polycarbonate resin, a polyamide resin or thermoplastic saturated polyester resin.

15. The composite of any one of the preceding claims, wherein said other fibers are selected from natural or synthetic polymeric fibers, other carbon fibers, ceramic fibers, glass fibers, metal fibers or metal coated fibers, and wherein said other fibers are present in said blend in an amount of up to 50 percent.

16. The composite of Claim 14, wherein said other fibers are selected from cotton, wool, polyester, polyolefin, nylon, rayon, asbestos, fibers of silica, silica alumina, potassium titantate, silicon carbide, silicon nitride, boron nitride, boron, acrylic fibers, tetrafluoroethylene fibers, polyamide fibers, vinyl fibers, protein fibers, and oxide fibers derived from boron, thoria or zirconia.